# EUROPEAN PATENT APPLICATION

(11) **EP 3 354 668 A1**
(43) Date of publication of application: **01.08.2018**
(21) Application number: 16848699.1
(22) Date of filing: 23.09.2016
(51) Int. Cl.: C08G 8/20, C08L 97/00, C08L 101/00

(54) **METHOD FOR PRODUCING PURIFIED LIGNIN, PURIFIED LIGNIN, RESIN COMPOSITION AND MOLDED BODY**

(30) Priority: 25.09.2015 JP 2015188807
(71) Applicant: Idemitsu Kosan Co., Ltd, Tokyo 100-8321 (JP)
(72) Inventor: OKANO, Masaki, Sodegaura-shi Chiba 299-0293 (JP); KOYAMA, Yoshihito, Sodegaura-shi Chiba 299-0293 (JP); YAMAO, Shinobu, Ichihara-shi Chiba 299-0193 (JP)
(74) Representative: Hoffmann Eitle
(86) International application number: PCT/JP2016/078123
(87) International publication number: WO 2017/051911

(57) **Abstract**

Provided is a method of producing a purified lignin, including: treating a plant biomass in a first solvent mixture formed of water and a first organic solvent under specific conditions; subjecting a solid fraction insoluble in a first solution mixture and the first solution mixture to solid-liquid separation after the treatment; mixing the first solution mixture from which the insoluble solid fraction has been separated, and a second organic solvent excluding the first organic solvent and having a dipole moment of 0.25 d or less to provide a second solution mixture; and subjecting a solid fraction insoluble in the second solution mixture to solid-liquid separation to extract the purified lignin in a liquid phase of the second solution mixture.

## Description

### TECHNICAL FIELD

The present invention relates to a method of producing a purified lignin from a plant biomass, a purified lignin obtained by the production method, a resin composition containing the purified lignin, and a molded body obtained by using the resin composition.

### BACKGROUND ART

Along with an increase in environmental awareness in recent years, a raw material derived from a biomass that replaces a raw material derived from a fossil fuel has started to be desired in a manufacturing field. However, as has been particularly remarkable in, for example, the production of a bioethanol, a raw material that competes with food, such as starch or sugar, is often used as the raw material derived from the biomass, and hence, for example, the following problem has been pointed out. The use leads to an increase in food price or a reduction in food production.

In view of the foregoing, a technology involving producing a biofuel, a biochemical product, or the like from a cellulosic biomass that does not compete with food has been recently attracting attention. Examples of the cellulosic biomass that does not compete with food include: trunks and empty fruit bunches of palm; fibers and seeds of palm fruits; bagasse (fibrous matter that remains after extracting sugarcane (including high-biomass sugarcane) juice) ; rice straws; wheat straws; corn cob and stover, and corn residues (corn stover, corn cob, and corn hulls) ; Sorghum (including sweet sorghum) residues; Jatropha Curcas seeds and hulls; cashew hulls; wood chips; switchgrass; Erianthus; and energy crops.

Those cellulosic biomasses each contain 20 mass% to 30 mass% of lignin in addition to cellulose and hemicellulose. In, for example, a paper-producing process, the lignin is separated from the cellulose and the hemicellulose, and is recovered as a black liquor, and the black liquor has been utilized mainly as a fuel. However, the lignin can be degraded to produce a phenol derivative. Further, the lignin can be expected to be converted into a chemical product or a bioplastic. Accordingly, the extraction of the lignin has been desired.

In view of the foregoing, a method involving degrading a biomass through a high-temperature and high-pressure treatment has been proposed as a method of extracting the lignin (see Patent Document 1).

The method is specifically as described below. The biomass is adjusted to a certain size. Next, the biomass is loaded into a pressure-tight vessel with a stirring machine and a heating apparatus together with a solvent, and a degradation treatment is performed by stirring the mixture while heating and pressurizing the mixture. The contents in the pressure-tight vessel are filtered, and the filtrate is removed, followed by the washing of a water-insoluble fraction with water. Next, the water-insoluble fraction is immersed in a solvent that can dissolve lignin, such as acetone, to extract the lignin in acetone, and acetone is evaporated. Thus, the lignin and a derivative thereof are obtained.

In addition, the following method has been proposed (see Patent Document 2). A raw material biomass is degraded in a solvent mixture of water and a specific aliphatic alcohol under a specific condition. After that, an alcohol phase containing lignin and a degradation product thereof is separated from the solvent mixture, and the alcohol phase is concentrated to provide a solid fraction. Further, the lignin and the degradation product thereof are extracted from the solid fraction with an organic solvent different from the aliphatic alcohol, such as ethyl acetate.

### CITATION LIST

### PATENT DOCUMENT

Patent Document 1: JP 5256813 B2
Patent Document 2: WO 2014/142289 A1

### SUMMARY OF INVENTION

### TECHNICAL PROBLEM

When the lignin extracted by the method of Patent Document 1 is used as a resin, an additional treatment, such as secondary derivatization, needs to be separately performed in a reaction tank, and hence the method has left a margin for improvement from the viewpoint of energy balance. In addition, the method of Patent Document 1 has involved the following problem in terms of application: the molecular weight of the lignin extracted by the method becomes excessively small.

In the method of Patent Document 2, there is a description that the lignin is extracted from the solid fraction, which is obtained by concentrating the alcohol phase, with the organic solvent, such as ethyl acetate. However, the method involving repeating the concentration and drying of the solvent has left a margin for improvement from the viewpoint of energy balance because the consumption of heat energy increases. In addition, a concern is raised about the denaturation of the lignin by thermal history in an extraction step.

In view of the above, an object of the present invention is to provide a method of producing a purified lignin that is energy-saving and efficient. Another object of the present invention is to provide a purified lignin obtained by the production method, a resin composition containing the purified lignin, and a molded body obtained by using the resin composition.

### SOLUTION TO PROBLEM

The inventors of the present invention have found that a purified lignin can be produced in an energy-saving and efficient manner by treating a plant biomass under a specific condition.

That is, the present invention relates to the following.
[1] A method of producing a purified lignin, comprising:
   treating a plant biomass in a first solvent mixture formed of water and a first organic solvent under the following conditions:
      Condition A: a loading concentration of the plant biomass with respect to the first solvent mixture is 1 mass% or more to 50 mass% or less,
      Condition B: a temperature in the treatment is 100°C or more to 350°C or less, and
      Condition C: a time period for the treatment is 0.1 hour or more to 10 hours or less;
   subjecting a first solution mixture obtained after the treatment and a solid fraction insoluble in the first solution mixture to solid-liquid separation;
   mixing the first solution mixture from which the insoluble solid fraction has been separated, and a second organic solvent excluding the first organic solvent and having a dipole moment of 0.25 d or less to provide a second solution mixture; and
   subjecting a solid fraction insoluble in the second solution mixture to solid-liquid separation to extract the purified lignin in a liquid phase of the second solution mixture.
[2] A method of producing a purified lignin, comprising:
   treating a plant biomass in a first solvent mixture formed of water and a first organic solvent under the following conditions:
      Condition A: a loading concentration of the plant biomass with respect to the first solvent mixture is 1 mass% or more to 50 mass% or less,
      Condition B: a temperature in the treatment is 100°C or more to 350°C or less, and
      Condition C: a time period for the treatment is 0.1 hour or more to 10 hours or less;
   subjecting a first solution mixture obtained after the treatment and a solid fraction insoluble in the first solution mixture to solid-liquid separation;
   mixing the first solution mixture from which the insoluble solid fraction has been separated and water serving as a second solvent to provide a second solution mixture; and
   subjecting a solid fraction insoluble in the second solution mixture to solid-liquid separation to extract the purified lignin in a liquid phase of the second solution mixture.
[3] The method of producing a purified lignin according to Item [1] or [2], wherein the first organic solvent comprises at least one selected from butanol, pentanol, hexanol, ethanol, and acetone.
[4] A method of producing a purified lignin, comprising:
   mixing a raw material lignin solution, and at least one solvent (a) selected from water and a hydrocarbon having a dipole moment of 0.25 d or less to provide a solution mixture; and
   subjecting a solid fraction insoluble in the solution mixture to solid-liquid separation to extract the purified lignin in a liquid phase of the solution mixture.
[5] The method of producing a purified lignin according to Item [4], wherein the raw material lignin solution comprises a lignin solution obtained by solubilizing lignin from a plant biomass in a solvent containing a first organic solvent except the hydrocarbon having a dipole moment of 0.25 d or less, or a solution obtained by dissolving solid lignin in the solvent containing the first organic solvent.
[6] The method of producing a purified lignin according to Item [5], wherein the first organic solvent comprises at least one selected from an alcohol, an ether, and a ketone.
[7] A purified lignin, comprising the following properties:
   a ratio of a phenolic hydroxyl group of a 2, 6-dimethoxyphenol moiety and a phenolic hydroxyl group of an o-methoxyphenol moiety to all phenolic hydroxyl groups is 90% or more;
   a ratio of a weight-average molecular weight to a number-average molecular weight is 2.3 or less;
   a ratio of a heavy component having a molecular weight of 3,000 or more in terms of polystyrene is less than 13%; and
   a total remaining amount of the first organic solvent and the second organic solvent is 1 mass% or less in terms of a mass ratio.
[8] A resin composition, comprising the purified lignin of Item [7] .
[9] A molded body, which is obtained by using the resin composition of Item [8].

### ADVANTAGEOUS EFFECTS OF INVENTION

According to the present invention, the method of producing a purified lignin by which the purified lignin can be produced in an energy-saving and efficient manner can be provided. According to the present invention, the purified lignin obtained by the production method, the resin composition containing the purified lignin, and the molded body obtained by using the resin composition can also be provided.

### BRIEF DESCRIPTION OF DRAWINGS

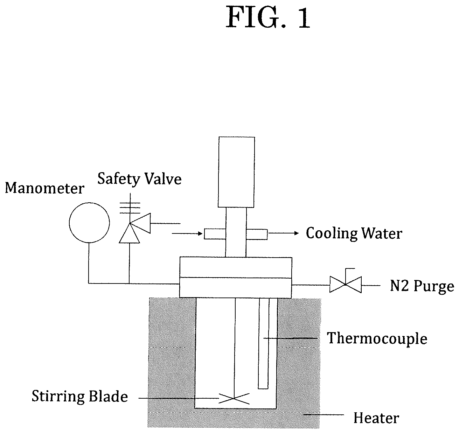

Figure 1 is a view for illustrating a batch apparatus used in each of Examples and Comparative Examples.

### DESCRIPTION OF EMBODIMENTS

A method of producing a purified lignin according to an embodiment of the present invention is described below.

### [Method of producing Purified Lignin]

A method of producing a purified lignin according to a first embodiment includes: treating a plant biomass in a first solvent mixture formed of water and a first organic solvent under the following conditions; subjecting a first solution mixture obtained after the treatment and a solid fraction insoluble in the first solution mixture to solid-liquid separation; mixing the first solution mixture from which the insoluble solid fraction has been separated, and a second organic solvent excluding the first organic solvent and having a dipole moment of 0.25 d or less to provide a second solution mixture; and subjecting a solid fraction insoluble in the second solution mixture to solid-liquid separation to extract the purified lignin in a liquid phase of the second solution mixture.

Alternatively, a method of producing a purified lignin according to a second embodiment includes: treating a plant biomass in a first solvent mixture formed of water and a first organic solvent under the following conditions; subjecting a first solution mixture obtained after the treatment and a solid fraction insoluble in the first solution mixture to solid-liquid separation; mixing the first solution mixture from which the insoluble solid fraction has been separated and water serving as a second solvent to provide a second solution mixture; and subjecting a solid fraction insoluble in the second solution mixture to solid-liquid separation to extract the purified lignin in a liquid phase of the second solution mixture.

The conditions are as follows:
Condition A: a loading concentration of the plant biomass with respect to the first solvent mixture is 1 mass% or more to 50 mass% or less,
Condition B: a temperature in the treatment is 100°C or more to 350°C or less, and
Condition C: a time period for the treatment is 0.1 hour or more to 10 hours or less.

The term "loading concentration" as used herein refers to a mass ratio between the first solvent mixture and the plant biomass loaded into the first solvent mixture as a raw material, and the raw material contains a component insoluble in the first solvent mixture. In addition, in this embodiment, the first solution mixture after the treatment with the first solvent mixture under the above-mentioned conditions A to C may contain a component in the plant biomass soluble in the first solvent mixture.

In the first embodiment, the second solution mixture is formed of the water, the first organic solvent, the second organic solvent, and a solute (purified lignin) dissolved in a solvent mixture thereof. In the second embodiment, the second solution mixture is formed of the water, the first organic solvent, and a solute (purified lignin) dissolved in a solvent mixture thereof.

In this embodiment, a product extracted in the first solvent mixture formed of the water and the first organic solvent after the treatment with the first solvent mixture under the above-mentioned conditions A to C is referred to as "crude lignin." In addition, a product obtained by adding the second organic solvent or the water to the first solution mixture containing the crude lignin to purify the solution to a desired fraction is referred to as "purified lignin." Details about the purified lignin are described later.

The method of producing a purified lignin is described in detail below.

First, the first embodiment and the second embodiment of the present invention are described in detail.

### <Step of treating Plant Biomass in First Solvent Mixture >

A step of treating the plant biomass in the first solvent mixture includes treating the plant biomass in the first solvent mixture formed of the water and the first organic solvent under the above-mentioned conditions A to C.

When the first solvent mixture is used, the crude lignin is extracted in the first organic solvent in the first solvent mixture, and part of a cellulose degradation product in the plant biomass, part of a hemicellulose degradation product in the plant biomass, and metals in the plant biomass are extracted in an aqueous phase. Thus, the crude lignin can be subjected to liquid-liquid separation.

As described above, according to the step of treating the plant biomass in the first solvent mixture, the amount of impurities in the crude lignin can be reduced.

### (Plant Biomass)

Examples of the plant biomass include a woody biomass and a herbaceous biomass. Examples of the woody biomass include coniferous trees and broad-leaf trees, such as cedar trees, Japanese cypress trees, false cypress trees, cherry trees, eucalyptus trees, beech trees, and bamboos.

Examples of the herbaceous biomass include: trunks and empty fruit bunches of palm; fibers and seeds of palm fruits; bagasse (fibrous matter that remains after extracting sugarcane and high-biomass sugarcane juice); cane tops (tops and leaves of sugarcane); energy cane; rice straws; wheat straws; corn cobs, stovers, and residues (corn stovers, corn cobs, and corn hulls); Sorghum (including sweet sorghum) residues; Jatropha Curcas seed coats and hulls; cashew hulls; switchgrass; Erianthus; high-biomass-yield crops; and energy crops.

Among them, from the viewpoints of the ease of availability and compatibility with the production method to be applied in the present invention, the herbaceous biomass is preferred, the empty fruit bunches of palm, the wheat straws, the corn stovers, the bagasse, the cane tops, and the energy cane, and residues after the extraction of useful components thereof are more preferred, and the bagasse, the cane tops, and the energy cane are still more preferred. Examples of the useful components include hemicellulose, a carbohydrate, a mineral, and moisture.

The bagasse contains about 5 mass% to about 30 mass% of lignin, and the lignin in the bagasse includes all of an H nucleus, a G nucleus, and an S nucleus as basic skeletons. The G nucleus is a nucleus having one methoxy group (-OCH₃) at an ortho position of a phenol skeleton portion, the S nucleus is a nucleus having two methoxy groups at ortho positions thereof, and the H nucleus is a nucleus having no methoxy group at an ortho position thereof. Lignin derived from a woody biomass is free of any H nucleus.

A ground plant biomass can be used as the plant biomass. In addition, the plant biomass may be in any one of the following forms : a block, a chip, powder, and a hydrated product containing the water.

### (First Solvent Mixture)

The first solvent mixture is formed of the water and the first organic solvent. The first organic solvent may be any one of a saturated linear alcohol, an unsaturated linear alcohol, a saturated branched alcohol, and an unsaturated branched alcohol. Polar solvents, for example, ketones, such as acetone and methyl ethyl ketone, and ethers, such as tetrahydrofuran, are also permitted. Ethylene glycol or a polyethylene glycol is also permitted. Further, the organic solvent may be a single solvent, or may be a mixture of two or more of solvents.

Among them, methanol, ethanol, propanol, butanol, pentanol, hexanol, acetone, and tetrahydrofuran are preferred, one or more selected from ethanol, butanol, pentanol, hexanol, and acetone are more preferred, and at least one selected from butanol, ethanol, pentanol, hexanol, and acetone is still more preferred. Any one of 1-butanol, 2-methyl-1-propanol, 2-butanol, and 2-methyl-2-propanol may be used as the butanol. Among them, 1-butanol, 2-methyl-1-propanol, or 2-butanol is preferably used, and 1-butanol is particularly preferably used.

When the first organic solvent is an alcohol, the molar ratio (water/alcohol) of the water to the alcohol is preferably from 1/1 to 40/1, more preferably from 1.5/1 to 30/1, still more preferably from 2/1 to 24/1. When the ratio of the water to the alcohol is more than the above range, the water and the alcohol may not undergo two-phase separation at 100°C or less. In addition, at a mixing ratio except that within the above range, the separation and removal of the crude lignin may be insufficient. A solvent mixture in which the water and the alcohol do not undergo two-phase separation at 100°C or less, and the alcohol has a boiling point lower than that of the water is not suitable as a solvent from the viewpoint of energy loss at the time of solvent separation.

In this embodiment, examples of the water to be used in the solvent include tap water, industrial water, ion-exchanged water, and distilled water.

### (With regard to Condition A)

In the condition A, the loading concentration of the plant biomass with respect to the first solvent mixture is 1 mass% or more to 50 mass% or less, preferably 3 mass% or more to 20 mass% or less, more preferably 5 mass% or more to 18 mass% or less. When the raw material concentration is less than 1 mass%, the amount of energy needed for heating the solvent mixture and for removing the solvent mixture increases, and hence the energy efficiency of a production process for the purified lignin deteriorates. When the raw material concentration is more than 50 mass%, the amount of the solvent mixture is not sufficient and hence the efficiency with which the crude lignin is separated reduces.

### (With regard to Condition B)

The reaction temperature under the condition B is 100°C or more to 350°C or less, preferably 150°C or more to 300°C or less, more preferably 170°C or more to 270°C or less. A temperature of less than 100°C is not preferred because the separation of the lignin hardly proceeds, and a temperature of more than 350°C is not preferred because cellulose degrades and the lignin repolymerizes to produce coke.

### (With regard to Condition C)

The reaction time under the condition C is 0.1 hour or more to 10 hours or less, preferably 0.2 hour or more to 8 hours or less, more preferably 1 hour or more to 6 hours or less, still more preferably 1 hour or more to 3 hours or less. When the reaction time is less than 0.1 hour, the separation does not sufficiently proceed, and when the reaction time is more than 10 hours, cellulose degrades, and the amount of coke to be produced by repolymerization of the lignin cannot be prevented from increasing.

### (Other Conditions)

In addition to the above-mentioned conditions A to C, the pressure of a reaction system in a separation step is desirably set to 0.5 MPa or more to 30 MPa or less. A more preferred condition may be appropriately set in accordance with the amounts of the water and the alcohol, and the temperature. The separation step can be performed under air. The separation step is preferably performed under an atmosphere in which an oxygen concentration has been reduced by performing nitrogen purging in order that the polymerization of the lignin by an oxidation reaction may be suppressed.

### <Step of extracting Purified Lignin in Liquid Phase of Second Solution Mixture>

According to the first embodiment of the present invention, a step of extracting the purified lignin in the liquid phase of the second solution mixture includes: subjecting the first solution mixture obtained after the step of treating the plant biomass in the first solvent mixture and the solid fraction insoluble in the first solution mixture to solid-liquid separation; mixing the first solution mixture from which the insoluble solid fraction has been separated, and the second organic solvent excluding the first organic solvent to provide the second solution mixture; and subjecting the solid fraction insoluble in the second solution mixture to solid-liquid separation to extract the purified lignin in the liquid phase. According to the second embodiment, the first solution mixture from which the insoluble solid fraction has been separated and the water are mixed to provide the second solution mixture.

### (Second Solution Mixture)

According to the first embodiment, the second solution mixture contains the water, the first organic solvent, the second organic solvent, and the solute (purified lignin). The second organic solvent is preferably a hydrocarbon having a dipole moment of 0.25 d or less, and the dipole moment is more preferably 0.23 d or less, still more preferably 0.20 d or less.

When the dipole moment of the second organic solvent is 0.25 d or less, the solid fraction insoluble in the second solution mixture can be satisfactorily subjected to solid-liquid separation, and hence the yield of the purified lignin can be increased. When the dipole moment of the second organic solvent is more than 0.25 d, efficiency at the time of the solid-liquid separation of the solid fraction insoluble in the second solution mixture deteriorates, and hence the yield of the purified lignin reduces.

Examples of compounds that can each be used as the second organic solvent are shown in Table 1 below. Here, the dipole moment is a value calculated with Winmostar MOPAC AMI (MOP6W70).

**Table 1**

| Name | CAS No. | Chemical formula | Dipole moment (debye) |
|---|---|---|---|
| Pentane | 109-66-0 | C₅H₁₂ | 0.01 |
| Isopentane | 78-78-4 | C₅H₁₂ | 0.01 |
| Cyclopentane | 287-92-3 | C₅H₁₀ | 0.00 |
| Cyclohexene | 110-82-7 | C₆H₁₀ | 0.18 |
| Cyclohexane | 110-82-7 | C₆H₁₂ | 0.00 |
| Hexane | 110-54-3 | C₆H₁₄ | 0.00 |
| Methylcyclohexane | 108-87-2 | C₇H₁₄ | 0.01 |
| Heptane | 142-82-5 | C₇H₁₆ | 0.01 |
| 2,2,4-Trimethylpentane | 540-84-1 | C₈H₁₈ | 0.03 |
| Ethylbenzene | 110-41-4 | C₈H₁₀ | 0.25 |
| *o*-Xylene | 95-47-6 | C₈H₁₀ | 0.47 |
| *m*-Xylene | 108-38-3 | C₈H₁₀ | 0.31 |
| *p*-Xylene | 106-42-3 | C₈H₁₀ | 0.06 |
| Styrene | 100-42-5 | C₈H₈ | 0.02 |

A solvent that can be used as the second organic solvent is a solvent excluding the first organic solvent, and is preferably a saturated chain hydrocarbon, unsaturated chain hydrocarbon, saturated cyclic hydrocarbon, or unsaturated cyclic hydrocarbon having 5 to 8 carbon atoms. Among the above organic solvents that can each be used as the second organic solvent, hexane, heptane, methylcyclohexane, or 2,2,4-trimethylpentane is more preferred.

In the second embodiment, the water is added as the second solvent to the first solution mixture. Examples of the water include tap water, industrial water, ion-exchanged water, and distilled water.

As any other embodiment, the crude lignin can be purified by mixing the first solution mixture, and at least one of the second organic solvent excluding the first organic solvent and having a dipole moment of 0.25 d or less, and the water.

By the method of producing a purified lignin according to the first embodiment, the purified lignin can be obtained by removing the first organic solvent and the second organic solvent from the liquid phase of the second solution mixture after the solid-liquid separation of the solid fraction insoluble in the second solution mixture. In the second embodiment, the purified lignin can be obtained by removing the first organic solvent. The first organic solvent and the second organic solvent in the liquid phase can be removed by, for example, volatilization, drying under reduced pressure, air-blow drying, or heat drying. In addition, for example, the following methods may each be adopted: a method involving mixing the liquid phase of the second solution mixture and water, subjecting the first organic solvent and the second organic solvent to azeotropic removal, and subjecting a solid fraction (purified lignin) precipitated in the solution mixture to solid-liquid separation; and a method involving additionally mixing the liquid phase of the second solution mixture, and at least one solvent selected from the second organic solvent and water, and subjecting a solid fraction (purified lignin) precipitated in the solution mixture to solid-liquid separation.

In the method of producing a purified lignin according to the first embodiment, instead of the deposition of the crude lignin through the concentration of the first solution mixture, after the solid-liquid separation of the solid fraction insoluble in the second solution mixture obtained by mixing the first solution mixture and the second organic solvent, the first organic solvent and the second organic solvent are removed by volatilization and drying under reduced pressure.

In the first embodiment, it is essential that the water (i.e. , a water-soluble fraction) be removed from the second solution mixture formed of the water, the first organic solvent, and the second organic solvent. However, a step of removing the water may be performed after the solid fraction insoluble in the first solution mixture and the first solution mixture have been subjected to solid-liquid separation, and before the first solution mixture is mixed with the second organic solvent, or the step may be performed after the solid fraction insoluble in the second solution mixture after the mixing with the second organic solvent has been subjected to solid-liquid separation.

In the second embodiment, it is essential that the water (i.e., a water-soluble fraction) be removed from the second solution mixture. However, a step of removing the water may be performed after the solid fraction insoluble in the first solution mixture and the first solution mixture have been subjected to solid-liquid separation, and before the first solution mixture is subsequently mixed with the water, or the step may be performed after the solid fraction insoluble in the second solution mixture after the mixing of the first solution mixture with the water has been subjected to solid-liquid separation.

### <Production Method involving using Raw Material Lignin Solution>

A method of producing a purified lignin according to a third embodiment includes: mixing a raw material lignin solution, and at least one of solvent (a) selected from water and a hydrocarbon having a dipole moment of 0.25 d or less (hereinafter referred to as "second organic solvent") to provide a solution mixture; and subjecting a solid fraction insoluble in the solution mixture to solid-liquid separation to extract the purified lignin in the liquid phase of the solution mixture.

Examples of the raw material lignin solution may include: a lignin solution (i) obtained by solubilizing lignin from a plant biomass in a solvent containing a first organic solvent; and a solution (ii) obtained by dissolving solid lignin in the solvent containing the first organic solvent.

The solution (i) may be, for example, a solution obtained by solubilizing lignin in a plant biomass in the solvent containing the first organic solvent through the separation of the biomass by a known method.

In the case of the solution (ii), any lignin may be used as the solid lignin without any particular limitation. For example, any one of the following may be used: solid lignin obtained by solubilizing the lignin from the above-mentioned plant biomass and then concentrating the resultant; solid lignin obtained from a black liquor produced in a pulp production process; and a residue remaining after the removal of sugar through the hydrolysis of cellulose and hemicellulose in a process for the saccharification of the plant biomass. The origin of the lignin is not particularly limited.

Although the first organic solvent is not particularly limited, the solvent may be any one of a saturated linear alcohol, an unsaturated linear alcohol, a saturated branched alcohol, and an unsaturated branched alcohol. Polar solvents, for example, ketones, such as acetone and methyl ethyl ketone, and ethers, such as tetrahydrofuran, are also permitted. Ethylene glycol or a polyethylene glycol is also permitted. Further, the organic solvent may be a single solvent, or may be a mixture of two or more solvents.

Among them, methanol, ethanol, propanol, butanol, pentanol, hexanol, acetone, and tetrahydrofuran are preferred, one or more selected from ethanol, butanol, pentanol, hexanol, and acetone are more preferred, and at least one selected from butanol, ethanol, pentanol, hexanol, and acetone is still more preferred. Any one of 1-butanol, 2-methyl-1-propanol, 2-butanol, and 2-methyl-2-propanol may be used as the butanol. Among them, 1-butanol, 2-methyl-1-propanol, or 2-butanol is preferably used, and 1-butanol is particularly preferably used.

The raw material lignin solution is preferably such that the concentration of the lignin in the organic solvent at 25°C is 1 mass% or more to 90 mass% or less.

A concentration of the lignin at 25°C of less than 1 mass% is not preferred because the energy efficiency of a production process for a heat-resistant lignin deteriorates. A concentration of the lignin at 25°C of more than 90 mass% is not preferred because the extent to which the lignin is purified is poor.

The concentration of the lignin at 25°C is preferably 1 mass% or more to 70 mass% or less, more preferably 1 mass% or more to 50 mass% or less, still more preferably 2 mass% or more to 40 mass% or less, particularly preferably 4 mass% or more to 30 mass% or less. When a plurality of kinds of organic solvents are used, the concentration of the lignin means a concentration in the total amount of the organic solvents.

According to the third embodiment, the raw material lignin solution is mixed with at least one of solvent selected from the water and the second organic solvent. Those described above can be used as the second organic solvent and the water, and preferred examples thereof are also the same as those described above. The solid fraction insoluble in the solution mixture obtained by mixing at least one selected from the water and the second organic solvent is subsequently subjected to solid-liquid separation. Thus, the purified lignin can be extracted in a liquid phase side.

Also in this embodiment, the purified lignin can be obtained by removing the organic solvents (the raw material lignin solution and the second organic solvent to be added later) from the liquid phase of the solution mixture. A method of removing the organic solvents from the liquid phase is as described above.

When the water is added to the raw material lignin solution, it is essential that the water (i.e., a water-soluble fraction) be removed. A step of removing the water can be performed, for example, after the solid fraction insoluble in the solution mixture has been subjected to solid-liquid separation.

### <Other Steps>

In the method of producing a purified lignin according to each of the first and second embodiments, to the extent that energy balance is not deteriorated, any other step, such as the removal of impurities, may be included during each of the step of treating the plant biomass in the first solvent mixture and the step of extracting the purified lignin with the second solution mixture described above, or between the steps. In the case of the third embodiment, any other step may be included before or after the step of adding the water and the second organic solvent to the raw material lignin solution.

In the production method according to an embodiment of the present invention, static separation can be adopted as a separation with the first solvent mixture and the second solution mixture. In addition, for example, a general batch reactor or semi-batch reactor can be utilized. Further, a system involving separating a slurry formed of the first solvent mixture, which is formed of the water and the first organic solvent, and the plant biomass serving as a raw material while extruding the slurry with, for example, a screw or a pump is applicable.

Furthermore, the method of producing a purified lignin according to this embodiment is applicable to a conventional lignin extraction method, i.e., a known kraft method, soda-AQ method, or organosolv method.

### [Purified Lignin]

A purified lignin according to an embodiment of the present invention is obtained by the above-mentioned production method, and has the following properties.

That is, the ratio of the phenolic hydroxyl groups of a 2,6-dimethoxyphenol moiety and an o-methoxyphenol moiety to all phenolic hydroxyl groups in the purified lignin is 90% or more. In addition, the ratio of a weight-average molecular weight to a number-average molecular weight is 2.3 or less, the ratio of a heavy component having a molecular weight of 3,000 or more in terms of polystyrene is less than 13%, and the total remaining amount of the first organic solvent and the second organic solvent is 1 mass% or less in terms of a mass ratio.

The ratio of the phenolic hydroxyl groups of the 2,6-dimethoxyphenol moiety and the o-methoxyphenol moiety to all the phenolic hydroxyl groups is a value calculated by ³¹P NMR after the phosphoric acid derivatization of lignin by the previous report (Energy Fuel 2010, 24, 2723).

The weight-average molecular weight (Mw) and the number-average molecular weight (Mn) are each a molecular weight in terms of polystyrene measured with a gel permeation chromatograph (GPC) (measurement temperature: 40°C, detector: RI) using a tetrahydrofuran solvent (hereinafter, any molecular weight is a molecular weight in terms of polystyrene).

The Mw of the purified lignin is preferably 800 or more to less than 4,000, more preferably 900 or more to less than 3,000, still more preferably 1,000 or more to less than 2,000.

The remaining amount of the first organic solvent and the second organic solvent in the purified lignin is a value calculated by gas chromatography (GC), though a method for the calculation is not particularly limited.

It is required that the purified lignin be soluble in an organic solvent from the viewpoint of versatility, or be thermally melted for improving workability in a molding step. And also, its glass transition point and softening point are desirably as low as possible.

In general, when the molecular weight of a crude lignin obtained by degrading lignin is small, its softening point is low, and when the crude lignin contains a large amount of a light component (low-molecular weight component), its glass transition point reduces.

Accordingly, in the case where a purified lignin obtained by purifying the crude lignin is applied to, for example, a resin composition for forming a product (molded body), when the molecular weight of the purified lignin is excessively low, the strength and heat resistance of the molded body to be obtained hit a plateau, and when the amount of the light component is excessively large, a molding failure or the like is liable to occur.

In view of the foregoing, the number-average molecular weight (Mn) of the purified lignin is preferably 500 or more to less than 2,000, more preferably 600 or more to less than 1,800, still more preferably 700 or more to less than 1,500.

When the number-average molecular weight (Mn) of the purified lignin is less than 500, the softening point of the purified lignin becomes 70°C or less, and hence its heat resistance reduces. In addition, when the number-average molecular weight is 2,000 or more, the softening point becomes 150°C or more, and hence the workability significantly reduces.

In addition, the ratio of the heavy component having a molecular weight of 3,000 or more (high-molecular weight component) in the purified lignin is preferably less than 13%, more preferably less than 12%, still more preferably less than 10%. When the ratio of the heavy component in the purified lignin is 13% or more, an excessive increase in viscosity or an excessively large amount of an undissolved component occurs at the time of the melting of the purified lignin by heating for the production of a resin composition, and hence, for example, a kneading failure with any other component, such as a filler, occurs to lead to a molding failure.

### [Applications of Purified Lignin]

The purified lignin obtained by the production method according to this embodiment can be used alone in applications and fields where a phenol resin has heretofore been used. In addition, a resin composition can be produced by blending the purified lignin according to this embodiment and any other phenol resin.

An epoxy-modified lignin can be produced by such a reaction that an epoxy group is introduced into the purified lignin according to this embodiment. Thus, the purified lignin according to this embodiment is applicable to applications and fields where an epoxy resin has heretofore been used.

Further, a heat-resistant lignin obtained by the production method according to this embodiment can be used as an additive for a thermoplastic resin.

The purified lignin according to this embodiment is applicable as, for example, a base resin raw material for a phenol resin or an epoxy resin, an additive (curing agent) for an epoxy resin, or an additive for a thermoplastic resin. This is because of the following feature: the purified lignin has a phenolic structural unit. The purified lignin according to this embodiment can be used in combination with a curing agent known to a person skilled in the art, such as an acid anhydride.

The purified lignin according to this embodiment contains small amounts of the light component (low-molecular weight component) and the heavy component (high-molecular weight component), and hence has a narrow molecular weight distribution. Accordingly, the purified lignin can be used as a base resin raw material in the formation of a resin composition.

A known approach can be used in the use of the purified lignin as a base resin raw material. An example thereof is a resin composition obtained by blending lignin and a known crosslinking agent typified by hexamethylenetetramine.

Various fillers or a general phenol resin that is industrially obtained may be blended into a resin composition obtained by blending lignin and a crosslinking agent as required.

A known approach described in, for example, JP 2014-15579 A can be used in the use of the purified lignin as an additive. Various additives or fillers may be blended into a resin composition obtained by blending lignin and a thermoplastic resin as required.

### [Resin Composition]

A resin composition according to an embodiment of the present invention contains the above-mentioned purified lignin. In addition, a resin component, such as a thermoplastic resin or a thermosetting resin, may be incorporated in addition to the above-mentioned purified lignin. The components except the purified lignin are described below.

### <Thermoplastic Resin>

The thermoplastic resin that can be blended into the resin composition according to this embodiment is preferably an amorphous thermoplastic resin having a glass transition temperature of 200°C or less, or a crystalline thermoplastic resin having a melting point of 200°C or less. Examples of the thermoplastic resin include a polycarbonate-based resin, a styrene-based resin, a polystyrene-based elastomer, a polyethylene resin, a polypropylene resin, a polyacrylic resin (e.g., a polymethyl methacrylate resin), a polyvinyl chloride resin, a cellulose acetate resin, a polyamide resin, a low melting point polyester resin typified by a polyester of a combination of terephthalic acid and ethylene glycol, or terephthalic acid and 1,4-butanediol (e.g., PET or PBT), a polylactic acid and/or a copolymer containing the polylactic acid, an acrylonitrile-butadiene-styrene resin (ABS resin), a polyphenylene oxide resin (PPO), a polyketone resin, a polysulfone resin, a polyphenylene sulfide resin (PPS), a fluorine resin, a silicon resin, a polybenzimidazole resin, and a polyamide elastomer, and copolymers of those resins and other monomers.

From the viewpoint that significant fluidity and significant strength are obtained, the content of the thermoplastic resin in the resin composition according to the present invention is preferably 30 mass% or more to 99.9 mass% or less, more preferably 40 mass% or more to 99.9 mass% or less, still more preferably 45 mass% or more to 99.9 mass% or less, particularly preferably 50 mass% or more to 99.9 mass% or less with respect to the total amount of the resin composition.

The resin composition according to this embodiment may contain a resin compatible with the thermoplastic resin composition, an additive, or a filler in addition to the cellulose-containing solid and the thermoplastic resin described above.

### <Thermosetting Resin>

A lignin-reactive compound having a functional group that can react with the purified lignin may be blended as the thermosetting resin that can be blended into the resin composition according to this embodiment. Examples of the compound having a functional group that can react with the purified lignin include a compound that causes an electrophilic substitution reaction with a phenol compound, a compound having an epoxy group, and a compound having an isocyanate group.

The purified lignin is applicable as, for example, a base resin raw material for a phenol resin, an epoxy resin, and the like, or an additive (curing agent) for an epoxy resin because the purified lignin has a phenolic structural unit.

### (Compound that causes Electrophilic Substitution Reaction with Phenol Compound)

Examples of the compound that causes an electrophilic substitution reaction with a phenol compound include formaldehyde, a formaldehyde-donating curing agent compound, and a formaldehyde-equivalent compound. Hexamethylenetetramine, hexaformaldehyde, and a paraformaldehyde can be commercially used. As an example, when the compound is hexamethylenetetramine, the blending amounts of the purified lignin and hexamethylenetetramine are preferably as described below.

That is, it is preferred that the purified lignin be incorporated at 50 mass% or more to 98 mass% or less on the basis of the total mass of the resin composition, and hexamethylenetetramine be incorporated at 2 mass% or more to 50 mass% or less on the basis of the total mass of the resin composition. When the content of hexamethylenetetramine falls within the range, a cured product having a satisfactory external appearance and satisfactory physical properties is obtained. From the foregoing viewpoint, hexamethylenetetramine is incorporated at more preferably 5 mass% or more to 30 mass% or less, still more preferably 10 mass% or more to 20 mass% or less on the basis of the total mass of the resin composition.

The resin composition according to this embodiment may further contain a phenol resin in addition to the purified lignin and hexamethylenetetramine. As described above, the purified lignin has a phenolic structural unit, and hence the phenol resin can be used as, for example, a diluent or extender for the purified lignin to the extent that the physical properties of the resin composition, such as processability, strength, and heat resistance, are not reduced.

When the resin composition contains the phenol resin, it is preferred that a resin mixture containing 10 mass% or more to 90 mass% or less of the purified lignin, and containing 10 mass% or more to 90 mass% or less of the phenol resin be incorporated at 50 mass% or more to 98 mass% or less on the basis of the total mass of the resin composition, and hexamethylenetetramine be incorporated at 2 mass% or more to 50 mass% or less on the basis of the total mass of the resin composition.

### (Compound having Epoxy Group)

The compound having an epoxy group belongs to a category that is referred to as a so-called epoxy resin. Examples thereof include: 2,2-bis(4'-hydroxyphenyl)propane (referred to as bisphenol A), bis(2-hydroxyphenyl)methane (referred to as bisphenol F), 4,4'-dihydroxydiphenyl sulfone (referred to as bisphenol S), 4,4'-dihydroxybiphenyl, resorcin, saligenin, trihydroxydiphenyldimethylmethane, tetraphenylolethane, halogen-substituted products and alkyl group-substituted products thereof, and a glycidyl ether-based epoxy resin synthesized from a compound having two or more hydroxyl groups in a molecule thereof, such as butanediol, ethylene glycol, erythrit, novolac, glycerin, or a polyoxyalkylene, and epichlorohydrin or the like; a glycidyl ester-based epoxy resin synthesized from the compound having two or more hydroxyl groups in a molecule thereof and phthalic acid glycidyl ester or the like; an epoxy resin having a glycidyl group, such as a glycidyl amine-based epoxy resin synthesized from a primary or secondary amine, such as aniline, diaminodiphenylmethane, m-xylenediamine, or 1,3-bisaminomethylcyclohexane, and epichlorohydrin or the like; and an epoxy resin free of a glycidyl group, such as an epoxidized soybean oil, an epoxidized polyolefin, vinylcyclohexene dioxide, or dicyclopentadiene dioxide. Among them, a cresol-novolac- or phenol-novolac-type epoxy resin that has a chemical structure similar to that of lignin and hence has satisfactory compatibility therewith is preferred.

When the purified lignin to be incorporated into the thermosetting resin composition according to this embodiment is caused to react with the compound having an epoxy group, the equivalent ratio (phenolic hydroxyl groups/epoxy groups) of phenolic hydroxyl groups in the purified lignin to epoxy groups in the compound having an epoxy group is preferably 0.7 or more to 1.3 or less.

When the ratio "phenolic hydroxyl groups/epoxy groups" is close to 1, the amount of an unreacted component of any one of the functional groups reduces, and hence the thermosetting resin composition has a satisfactory external appearance and easily maintains its strength. From this viewpoint, the ratio "phenolic hydroxyl groups/epoxy groups" in the purified lignin is more preferably 0.8 or more to 1.2 or less, still more preferably 0.9 or more to 1.1 or less.

The thermosetting resin composition according to this embodiment may further contain a phenol resin in addition to the purified lignin and the compound having an epoxy group. When the composition contains the phenol resin, the equivalent ratio (total of phenolic hydroxyl groups/epoxy groups) of the total of phenolic hydroxyl groups in a resin mixture, containing 10 mass% or more to 90 mass% or less of the purified lignin and 10 mass% or more to 90 mass% or less of the phenol resin, to epoxy groups in the compound having an epoxy group, i.e., the epoxy resin is preferably 0.7 or more to 1.3 or less.

When the purified lignin in the thermosetting resin composition according to this embodiment is caused to react with the compound having an epoxy group, a curing accelerator may be appropriately added in accordance with the purpose of accelerating a curing reaction. Specific examples thereof include: imidazoles, such as 2-methylimidazole, 2-ethylimidazole, and 2-ethyl-4-methylimidazole; tertiary amines, such as 2-(dimethylaminomethyl)phenol and 1,8-diazabicyclo(5,4,0)undecene-7; phosphines, such as triphenylphosphine; quaternary ammonium salts, such as a tetrabutylammonium salt, a triisopropylmethylammonium salt, a trimethyldecanylammonium salt, and a cetyltrimethylammonium salt; quaternary phosphonium salts, such as a triphenylbenzylphosphonium salt, a triphenylethylphosphonium salt, and a tetrabutylphosphonium salt; and metal compounds, such as tin octylate. As counter ions of the quaternary phosphonium salts, there are given, for example, a halogen, an organic acid ion, and a hydroxide ion, and the organic acid ion and the hydroxide ion are particularly preferred.

The curing accelerator is preferably incorporated at a content of 0.1 part by mass or more to 10 parts by mass or less with respect to 100 parts by mass of the thermosetting resin composition. When the content of the curing accelerator falls within the range, excellent reactivity is obtained, and the thermosetting resin composition is excellent in heat resistance and strength. From this viewpoint, the content is more preferably 0.3 parts by mass or more to 5 parts by mass or less, still more preferably 0.5 parts by mass or more to 3 parts by mass or less.

### (Compound having Isocyanate Group)

The compound having an isocyanate group (hereinafter referred to as "isocyanate compound") is a polyisocyanate, or is obtained by causing the polyisocyanate and a polyol to react with each other. Examples of the polyisocyanate include: aromatic polyisocyanates, such as tolylene diisocyanate (TDI), 4,4'-diphenylmethane diisocyanate (MDI), polymeric MDI (MDI-CR), and carbodiimide-modified MDI (liquid MDI); aliphatic polyisocyanates, such as norbornane diisocyanate (NBDI), isophorone diisocyanate (IPDI), hexamethylene diisocyanate (HDI), 4,4'-methylene-bis(cyclohexyl isocyanate) (hydrogeneated MDI), and xylylene diisocyanate (XDI); and block isocyanates. Among them, tolylene diisocyanate (TDI) and 4, 4'-diphenylmethane diisocyanate (MDI) are preferably used.

When the purified lignin to be incorporated into the resin composition according to this embodiment is caused to react with the isocyanate compound, the equivalent ratio (total of phenolic hydroxyl groups and alcoholic hydroxyl groups/isocyanate groups) of the total of phenolic hydroxyl groups and alcoholic hydroxyl groups in the purified lignin to isocyanate groups in the isocyanate compound is preferably 0.8 or more to 1.2 or less. When the ratio "total of phenolic hydroxyl groups and alcoholic hydroxyl groups/isocyanate groups" falls within the range, the unreacted amount of any one of the functional groups reduces, and hence failure phenomena concerning the curing rate, external appearance, and physical properties of the resin composition are suppressed.

From the foregoing viewpoint, the equivalent ratio (total of phenolic hydroxyl groups and alcoholic hydroxyl groups/isocyanate groups) of the total of the phenolic hydroxyl groups and alcoholic hydroxyl groups in the purified lignin to the isocyanate groups in the isocyanate compound is more preferably 0.85 or more to 1.15 or less, still more preferably 0.9 or more to 1.1 or less.

In addition, the thermosetting resin composition according to this embodiment may further contain a phenol resin in addition to the purified lignin and the isocyanate compound. When the composition contains the phenol resin, the equivalent ratio (total of phenolic hydroxyl groups and alcoholic hydroxyl groups/isocyanate groups) of the total of phenolic hydroxyl groups and alcoholic hydroxyl groups in a resin mixture, containing 10 mass% or more to 90 mass% or less of the purified lignin and 10 mass% or more to 90 mass% or less of the phenol resin, to the isocyanate groups in the isocyanate compound is preferably 0.8 or more to 1.2 or less.

A curing accelerator may be appropriately added to the resin composition according to this embodiment in accordance with the purpose of accelerating a curing reaction. Examples of the curing accelerator include an organic metal-based catalyst, such as zirconium or aluminum, dibutyltin laurate, a phenol salt or octylic acid salt of DBU, an amine, and imidazole. Among them, an organic metal-based catalyst, such as aluminum sec-butylate, aluminum ethylacetoacetate diisopropylate, zirconium tributoxy-acetylacetonate, or zirconium tetraacetylacetonate, is particularly preferred in terms of a coloring property. The amount of the curing accelerator is set to preferably 0.001 part by mass or more to 1.0 part by mass or less, more preferably 0.05 parts by mass or more to 0.5 parts by mass or less with respect to 100 parts by mass of the thermosetting resin composition.

### (Other Resin Components)

The resin composition according to this embodiment may contain a resin, such as a phenol resin, a urea resin, a melamine resin, a silicone resin, an unsaturated polyester resin, an alkyd resin, or a polyurethane resin, in addition to the purified lignin.

Among the resins, a phenol resin is preferred because the resin has a phenolic hydroxyl group as in the purified lignin, can react with the purified lignin, and can be used as a diluent for the purified lignin.

### <Inorganic Filler and Organic Filler>

The resin composition according to this embodiment may contain a filler. The filler may be an inorganic filler, or may be an organic filler.

Examples of the inorganic filler include silica powder, such as spherical or crushed fused silica or crystalline silica, alumina powder, glass powder, glass fiber, glass flake, mica, talc, calcium carbonate, alumina, hydrated alumina, boron nitride, aluminum nitride, silicon nitride, silicon carbide, titanium nitride, zinc oxide, tungsten carbide, and magnesium oxide.

Examples of the organic filler include carbon fiber, aramid fiber, paper powder, cellulose fiber, cellulose powder, chaff powder, fruit shell or nut powder, chitin powder, and starch.

A single inorganic filler or organic filler may be incorporated, or a combination of a plurality of such fillers may be incorporated, and a filler content is determined in accordance with purposes. When the inorganic filler and/or the organic filler is incorporated, the content of the inorganic filler and/or the organic filler is desirably proper in order that satisfactory physical properties and satisfactory moldability may be obtained. From the above viewpoint, an upper limit value for the content of the inorganic filler and/or the organic filler is preferably more than 0 parts by mass and 400 parts by mass or less, more preferably 0 parts by mass or more to 300 parts by mass or less, still more preferably 0 parts by mass or more to 250 parts by mass or less with respect to 100 parts by mass of the total of a resin component in the thermoplastic resin composition.

### <Other Additives>

Various additives can be added to the resin composition according to this embodiment to the extent that the characteristics of a molded body obtained from the resin composition are not impaired. In addition, a compatibilizer, a surfactant, or the like can be further added thereto in accordance with purposes.

A resin obtained by adding maleic anhydride, an epoxy, or the like to the thermoplastic resin to introduce a polar group, such as a maleic anhydride-modified polyethylene resin or a maleic anhydride-modified polypropylene resin, and various commercial compatibilizers may be used in combination as the compatibilizers to be used together with the thermoplastic resin.

Examples of the surfactant include, but not particularly limited to, linear fatty acids, such as stearic acid, palmitic acid, and oleic acid, and branched and cyclic fatty acids obtained by causing the acids to react with rosins.

Further, as additives that can be blended into the resin composition in addition to those described above, there are given, for example, a flexibilizer, a heat stabilizer, a UV absorber, a flame retardant, an antistatic agent, a defoaming agent, a thixotropy-imparting agent, a release agent, an antioxidant, a plasticizer, a stress-reducing agent, a coupling agent, a dye, a light-scattering agent, and a small amount of a thermoplastic resin.

### [Molded Body]

A molded body according to an embodiment of the present invention is obtained from a resin composition containing the purified lignin obtained by the above-mentioned production method. Examples of the molded body include: a molded body obtained by curing a resin composition obtained by blending the purified lignin and a crosslinking agent; a molded body obtained by blending the purified lignin with various fillers or a general phenol resin that is industrially obtained as required, and molding the mixture into a predetermined shape, followed by curing, or curing the mixture, followed by molding; and a molded body obtained by molding a resin composition obtained by mixing the purified lignin with a thermoplastic resin.

Specific examples thereof include heat insulating materials for housing, electronic parts, resins for frac sands, resins for coated sands, resins for immersion, resins for lamination, resins for FRP molding, automobile parts, reinforcing materials for automobile tires, OA equipment, machines, information and communication equipment, and industrial materials.

### EXAMPLES

The present invention is described in more detail below with reference to Examples. However, the present invention is not limited to the following Examples.

### [Production of Purified Lignin]

### <Example 1>

Bagasse (sample size: 3-millimeter square or less) serving as a raw material and a first solvent mixture prepared by using butanol as a first organic solvent so that a molar ratio "water/butanol" became 8/1 were loaded into a SUS-made batch apparatus having an internal volume of 0.92 L (see Fig. 1). The total amount of water and butanol serving as the first solvent mixture was 315 g.

The loading concentration of the bagasse serving as the raw material was set to 10 mass% in terms of a total mass ratio with respect to the first solvent mixture. After the inside of the SUS-made batch apparatus had been purged with nitrogen, a temperature in the apparatus was increased to 200°C, and the bagasse was treated at a reaction temperature of 200°C for 2 hours. A treatment time was defined as an elapsed time period after the temperature had reached 200°C. The temperature was measured with a thermocouple.

After the completion of the treatment, the SUS-made batch apparatus was cooled. After the temperature had reduced to 100°C or less, and reached around the room temperature, all the contents were removed. After the treatment, a biomass residue and a liquid phase were separated by filtration. Further, the aqueous phase and butanol phase (corresponding to the solvent from which the aqueous phase had been separated) of the filtrate were subjected to liquid-liquid separation with a separatory funnel. The separated butanol phase and heptane (dipole moment: 0.01 d) serving as a second organic solvent were mixed so that a volume ratio "butanol phase (solvent from which the aqueous phase had been separated) /heptane (second organic solvent)" became 4.4. Thus, a second solution mixture was obtained. Furthermore, the solution was stirred at 25°C.

A precipitate produced after the stirring was removed, and the solvent was evaporated from the second solution mixture after the removal of the precipitate with an evaporator (60°C, water bath) . After that, the residue was dried in vacuum under the conditions of 125°C and 1 hour to provide a purified lignin. The physical properties of the resultant purified lignin are shown in Table 2-1.

### <Examples 2 to 9>

Purified lignins were each obtained by the same manner of Example 1 except that the second organic solvent and the stirring temperature of the second solution mixture (25°C or 50°C) were changed as shown in Table 2-1.

### <Example 10>

The same method as that of Example 1 was performed up to the liquid-liquid separation of the aqueous phase and butanol phase (corresponding to the solvent from which the aqueous phase had been separated) of the filtrate with a separatory funnel. The butanol phase subjected to the liquid-liquid separation was evaporated with an evaporator (60°C, water bath) so that the concentration of lignin in the butanol phase was adjusted to 12.5 wt%. After that, the butanol phase was mixed with water serving as a second solvent so that a volume ratio "butanol phase/water (second solvent) " became 0.17. Thus, a second solution mixture was obtained. Then, the solution was stirred at 25°C.

A precipitate produced after the stirring was removed, and the solvent was evaporated from the second solution mixture after the removal of the precipitate with an evaporator (60°C, water bath) . After that, the residue was dried in vacuum under the conditions of 125°C and 1 hour to provide a purified lignin. The physical properties of the resultant purified lignin are shown in Table 2-1.

### <Example 11>

Bagasse (sample size: 3-millimeter square or less) serving as a raw material, and a solvent mixture of water and 1-butanol serving as an organic solvent (prepared so that a molar ratio "water/1-butanol" became 8/1) were loaded into a SUS-made batch apparatus having an internal volume of 0.92 L. The mass of the solvent mixture formed of water and butanol was 300 g. The loading concentration of the bagasse was set to 10 mass% in terms of a mass ratio with respect to the solvent mixture.

After the inside of the SUS-made batch apparatus had been purged with nitrogen, a temperature in the apparatus was increased to 200°C, and a degradation reaction was performed at 200°C for 2 hours . A reaction time was defined as an elapsed time period after the temperature had reached 200°C. The temperature was measured with a thermocouple. A pressure in the apparatus at the time of the reaction was 1.9 MPa.

After the completion of the reaction, the SUS-made batch apparatus was cooled to around the room temperature. After that, all the contents were removed, and were filtrated to be separated into a biomass residue and a liquid phase. Further, the aqueous phase and 1-butanol phase of the filtrate were subjected to liquid-liquid separation with a separatory funnel. The separated butanol phase was concentrated, and was dried in vacuum at 125°C to provide 6.5 g of a solid (lignin).

1 g of the resultant solid was dissolved in 5 mL of acetone. The concentration of the lignin in the solution was 25 mass%. 0.5 Milliliter (0.1 times as large as the amount of the organic solvent) of hexane was added to the acetone solution. The solution mixture was stirred at 25°C for 15 minutes, and then a produced precipitate was removed. The solvent was evaporated from the solution mixture after the removal of the precipitate with an evaporator (60°C, water bath). After that, the residue was dried in vacuum under the conditions of 125°C and 1 hour to provide a purified lignin. The physical properties of the resultant purified lignin are shown in Table 2-3.

### <Example 12>

The same operation as that of Example 11 was performed except that heptane was used as a second organic solvent.

### <Example 13>

The same procedure as that of Example 11 was performed up to the step of dissolving the solid (lignin) in acetone. 5 Milliliters (1 times as large as the amount of the organic solvent) of water was added to the acetone solution. The solution mixture was stirred at 25°C for 15 minutes, and then a produced precipitate was removed. The solvent was evaporated from the second solution mixture after the removal of the precipitate with an evaporator (60°C, water bath) . After that, the residue was dried in vacuum under the conditions of 125°C and 1 hour to provide a purified lignin. The physical properties of the resultant purified lignin are shown in Table 2-3.

### <Example 14>

The same operation as that of Example 11 was performed except that ethanol was used as a first organic solvent.

### <Comparative Examples 1 to 5>

Purified lignins were each obtained by the same method as that of Example 1 except that the second organic solvent was changed as shown in Table 2-2.

### <Reference Example 1>

In the treatment of Example 1, the biomass residue and the liquid phase were separated by filtration from the first solution mixture, and the aqueous phase and butanol phase (corresponding to the solvent from which the aqueous phase had been separated) of the filtrate were subjected to liquid-liquid separation with a separatory funnel. After that, the butanol phase was evaporated with an evaporator (70°C, water bath), and then the residue was dried in vacuum under the conditions of 125°C and 1 hour to provide a crude lignin. After that, the resultant crude lignin was loaded into a beaker containing ethyl acetate (67 mL/g-concentrated product), and the mixture was stirred for 20 minutes. After the stirring, the mixture was statically left for 10 minutes, and then the supernatant liquid was removed by decantation. The supernatant liquid was filtered under reduced pressure. Thus, a slight amount of the solid fraction was removed.

Ethyl acetate (33 mL/g-concentrated product) was loaded into the solid fraction remaining in the beaker, and the mixture was stirred for 20 minutes. After the stirring, the mixture was statically left for 10 minutes, and then the supernatant liquid was removed by decantation. The supernatant liquid was filtered under reduced pressure. Thus, a slight amount of the solid fraction was removed.

Ethyl acetate (13 mL/g-concentrated product) was loaded into the solid fraction remaining in the beaker, and the mixture was stirred for 10 minutes. After the stirring, the mixture was statically left for 10 minutes, and then the supernatant liquid was removed again by decantation. The supernatant liquid was filtered under reduced pressure. Thus, a slight amount of the solid fraction was removed.

The resultant supernatant liquid (ethyl acetate-soluble fraction) was evaporated with an evaporator (60°C, water bath), and then the residue was dried in vacuum under the conditions of 150°C and 30 minutes to provide a purified lignin.

### <Comparative Example 6>

The solid (lignin) obtained in Example 11.

### [Evaluations of Physical Properties of Purified Lignin]

The physical properties of the purified lignin obtained in Example 1 and the physical properties of the purified lignin obtained in Reference Example 1 were compared to each other.

### [Evaluation Method]

### <Ratio of Phenolic Hydroxyl Groups>

With regard to the ratio of phenolic hydroxyl groups, the ratio of the phenolic hydroxyl groups of each of the purified lignins was measured in accordance with the previous report (Energy Fuel 2010, 24, 2723).

### <Weight-average Molecular Weight and Number-average Molecular Weight>

The weight-average molecular weight (Mw) and number-average molecular weight (Mn) of each of the above purified lignins were measured with a gel permeation chromatograph (GPC) using a tetrahydrofuran solvent (measurement temperature: 40°C, detector: RI). The weight-average molecular weight and the number-average molecular weight are molecular weights in terms of polystyrene.

### <Stirring Temperature of Second Solution Mixture>

The stirring temperature of the second solution mixture is a temperature at the time of the stirring after the production of the second solution mixture through the mixing of the first solution mixture and the second organic solvent.

### [Evaluations of Physical Properties of Purified Lignin]

### <Glass Transition Temperature>

The glass transition temperature of each of the purified lignins was measured by a solid viscoelasticity measurement method. A molded plate of the purified lignin was produced by using a pressing machine, and a sample measuring 5 mm by 30 mm by 1 mm was cut out of the molded plate, followed by the measurement of its loss tangent tanδ with DMA8000 (manufactured by PerkinElmer Japan Co., Ltd.) at a rate of temperature increase of 2°C/min and 1 Hz in the range of from 0°C to 300°C, or until its elastic modulus reached the critical lowest elastic modulus. The peak temperature of the resultant tan5 was defined as the glass transition temperature (Tg).

### [Evaluation of Thermosetting Resin Composition]

### <Reaction Curing Time>

Thermosetting resin compositions were produced by using the purified lignin of Example 1 and the purified lignin of Reference Example 1. In addition, cured products thereof were produced, and their physical properties were evaluated.

Respective components were loaded into a mortar at the following blending ratio: 100 parts of each of the purified lignins was blended with 15 parts of a curing agent. The components were ground at room temperature and mixed. After that, the ground products were mixed with an open roll kneader at 100°C for 5 minutes, and were then cooled to room temperature.

The mixture was ground in a mortar, and was sandwiched between aluminum plates each having applied thereto a release agent, followed by molding with a vacuum pressing machine under reduced pressure at 150°C for 60 minutes. After the molding, the resultant was cured at 200°C for 120 minutes to provide a molded article.

The glass transition temperature of the resultant molded article was measured by a solid viscoelasticity measurement method. A sample measuring 5 mm by 30 mm by 1 mm was cut out of the resultant molded article, and its loss tangent tan5 was measured with DMA8000 (manufactured by PerkinElmer Japan Co., Ltd.) at 150°C. The peak time of the resultant tan5 was defined as a reaction curing time.

**Table 2-1**

| | | Examples | | | | | | | | | |
|---|---|---|---|---|---|---|---|---|---|---|---|
| | | 1 | 2 | 3 | 4 | 5 | 6 | 7 | 8 | 9 | 10 |
| First solvent mixture | Water (mol) | 8 | 8 | 8 | 8 | 8 | 8 | 8 | 8 | 8 | 8 |
| | Butanol (mol) | 1 | 1 | 1 | 1 | 1 | 1 | 1 | 1 | 1 | 1 |
| Second (organic) solvent | | Heptane | Hexane | Methyl cyclohexane | 2,2,4-Trimethyl pentane | Hexane | Heptane | Heptane | Heptane | Heptane | Water |
| Dipole moment of butanol^{*1} | Debye | 1.52 | 1.52 | 1.52 | 1.52 | 1.52 | 1.52 | 1.52 | 1.52 | 1.52 | 1.52 |
| Dipole moment of second organic solvent^{*1} | Debye | 0.01 | 0.00 | 0.01 | 0.03 | 0.00 | 0.01 | 0.01 | 0.01 | 0.01 | - |
| Difference between dipole moments | | 1.51 | 1.52 | 1.51 | 1.49 | 1.52 | 1.51 | 1.51 | 1.51 | 1.51 | - |
| Butanol/second organic solvent | vol/vol | 4.4 | 4.4 | 4.4 | 4.4 | 4.4 | 1 | 3.3 | 2 | 1 | 0.17 |
| Solid/(solid+precipitate) | wt/wt | 0.78 | 0.76 | 0.74 | 0.80 | 0.85 | 0.48 | 0.89 | 0.73 | 0.60 | 0.85 |
| Stirring temperature of second solution mixture | °C | 25 | 25 | 25 | 25 | 50 | 25 | 50 | 50 | 50 | 25 |
| Mw | - | 1,308 | 1,076 | 1,435 | 1,484 | 1,315 | 862 | 1,197 | 1,174 | 924 | 1,389 |
| Mw/Mn | - | 2.1 | 1.9 | 2.2 | 2.2 | 2.15 | 1.75 | 2.22 | 2.05 | 1.83 | 2.2 |
| Ratio of heavy component (having molecular weight of 3,000 or more) | % | 9.3 | 5.4 | 8.7 | 9.1 | 9.5 | 2.3 | 7.8 | 6.7 | 3.0 | 11.8 |
| Remaining amount of first organic solvent and second organic solvent (GC) | % | <1 | <1 | <1 | <1 | <1 | <1 | <1 | <1 | <1 | <1 |
| Ratio of phenolic hydroxyl groups^{*2} | % | 92.4 | 92.4 | 92.4 | 92.4 | 92.4 | 92.4 | 92.4 | 92.4 | 92.4 | 92.4 |

| | | | | | | | | | | | |
|---|---|---|---|---|---|---|---|---|---|---|---|
| *1: A value calculated with Winmostar MOPAC AMI (MOP6W70) *2: (OH of 2,6-dimethoxyphenol moiety + OH of *o*-methoxyphenol moiety)/(OH of 2,6-dimethoxyphenol moiety + OH of *o*-methoxyphenol moiety + unsubstituted phenolic OH) | | | | | | | | | | | |

**Table 2-2**

| | | Comparative Examples | | | | | Reference Example |
|---|---|---|---|---|---|---|---|
| | | 1 | 2 | 3 | 4 | 5 | 1 |
| First solvent mixture | Water (mol) | 8 | 8 | 8 | 8 | 8 | 8 |
| | Butanol (mol) | 1 | 1 | 1 | 1 | 1 | 1 |
| Second organic solvent | | Toluene | Furan | Ethanol | Ethyl acetate | THF | Ethyl acetate |
| Dipole moment of butanol^{*1} | Debye | 1.52 | 1.52 | 1.52 | 1.52 | 1.52 | 1.52 |
| Dipole moment of second organic solvent^{*1} | Debye | 0.26 | 0.49 | 1.55 | 1.83 | 1.92 | 1.83 |
| Difference between dipole moments | | 1.26 | 1.03 | -0.03 | -0.31 | -0.4 | -0.31 |
| Butanol/second organic solvent | vol/vol | 2.0 | 2.0 | 2.0 | 2.0 | 2.0 | * |
| Solid/(solid+precipitate) | wt/wt | 0.97 | 1 | 1 | 1 | 1 | * |
| Stirring temperature of second solution mixture | °C | 25 | 25 | 25 | 25 | 25 | * |
| Mw | - | 1,637 | 1,553 | 1,574 | 1,574 | 1,574 | 603 |
| Mw/Mn | - | 2.41 | 2.45 | 2.41 | 2.41 | 2.41 | 2.1 |
| Ratio of heavy component (having molecular weight of 3,000 or more) | % | 15.5 | 13.9 | 13.1 | 13.1 | 13.1 | 9.8 |
| Remaining amount of first organic solvent and second organic solvent (GC) | % | <1 | <1 | <1 | <1 | <1 | * |
| Ratio of phenolic hydroxyl groups^{*2} | % | 92.4 | 92.4 | 92.4 | 92.4 | 92.4 | * |

| | | | | | | | |
|---|---|---|---|---|---|---|---|
| *1: A value calculated with Winmostar MOPAC AMI (MOP6W70) *2: Ratio of phenolic hydroxyl groups = [{(phenolic hydroxyl group of 2,6-dimethoxyphenol moiety) + (phenolic hydroxyl group of o-methoxyphenol moiety)}/{(phenolic hydroxyl group of 2,6-dimethoxyphenol moiety)+(phenolic hydroxyl group of *o*-methoxyphenol moiety) + (unsubstituted phenolic hydroxyl group)}]×100 | | | | | | | |

**Table 2-3**

| | | Examples | | | | Comparative Example |
|---|---|---|---|---|---|---|
| | | 11 | 12 | 13 | 14 | 6 |
| First solvent mixture | | Acetone | Acetone | Acetone | Ethanol | |
| Second solvent | | Hexane | Heptane | Water | Hexane | |
| Dipole moment of acetone^{*1} | Debye | 2.69 | 2.69 | 2.69 | 2.69 | |
| Dipole moment of second organic solvent^{*1} | Debye | 0.00 | 0.01 | - | 0.00 | |
| Difference between dipole moments | | 2.69 | 2.68 | - | 2.69 | |
| First organic solvent/second organic solvent | vol/vol | 10.0 | 10.0 | 1.0 | 10.0 | |
| Solid/(solid+precipitate) | wt/wt | 0.90 | 0.89 | 0.82 | 0.92 | |
| Stirring temperature of second solution mixture | °C | 25 | 25 | 25 | 25 | |
| Mw | - | 1,431 | 1,415 | 1,357 | 1,452 | 1,598 |
| Mw/Mn | - | 2.25 | 2.23 | 2.18 | 2.27 | 2.41 |
| Ratio of heavy component (having molecular weight of 3,000 or more) | % | 11.8 | 11.5 | 10.8 | 11.9 | 14.2 |
| Remaining amount of first organic solvent and second organic solvent (GC) | % | <1 | <1 | <1 | <1 | <1 |
| Ratio of phenolic hydroxyl groups^{*2} | % | 92.4 | 92.4 | 92.4 | 92.4 | 92.4 |

**Table 3**

| | Example 1 | Reference Example 1 |
|---|---|---|
| Raw material | Herbaceous (bagasse) | Herbaceous (bagasse) |
| Thermal history (vacuum drying conditions) | 125°C 1 hr | 125°C 1 hr |
| | | 150°C 0.5 hr |
| Number-average molecular weight Mn | 635 | 603 |
| Mw/Mn | 2.1 | 2.1 |
| Ratio of heavy component having molecular weight of 3,000 or more (%) | 9.3 | 9.8 |
| Glass transition point (°C) | 69 | 66 |
| Reaction curing time (min) | 15 | 20 |

### [Result]

It was found that the reaction curing time of the purified lignin obtained by the production method of Example 1 was able to be shortened as compared to that of the purified lignin obtained by the method of Reference Example 1. This is probably because the purified lignin obtained by the production method according to the present invention does not cause any thermal denaturation or causes thermal denaturation to a low degree, and hence a larger number of reactive sites than that in the purified lignin obtained by the method of Reference Example 1 are present.

## Claims

1. A method of producing a purified lignin, comprising:
treating a plant biomass in a first solvent mixture formed of water and a first organic solvent under the following conditions:
Condition A: a loading concentration of the plant biomass with respect to the first solvent mixture is 1 mass% or more to 50 mass% or less,
Condition B: a temperature in the treatment is 100°C or more to 350°C or less, and
Condition C: a time period for the treatment is 0.1 hour or more to 10 hours or less;
subjecting a first solution mixture obtained after the treatment and a solid fraction insoluble in the first solution mixture to solid-liquid separation;
mixing the first solution mixture from which the insoluble solid fraction has been separated, and a second organic solvent excluding the first organic solvent and having a dipole moment of 0.25 d or less to provide a second solution mixture; and
subjecting a solid fraction insoluble in the second solution mixture to solid-liquid separation to extract the purified lignin in a liquid phase of the second solution mixture.

2. A method of producing a purified lignin, comprising:
treating a plant biomass in a first solvent mixture formed of water and a first organic solvent under the following conditions:
Condition A: a loading concentration of the plant biomass with respect to the first solvent mixture is 1 mass% or more to 50 mass% or less,
Condition B: a temperature in the treatment is 100°C or more to 350°C or less, and
Condition C: a time period for the treatment is 0.1 hour or more to 10 hours or less;
subjecting a first solution mixture obtained after the treatment and a solid fraction insoluble in the first solution mixture to solid-liquid separation;
mixing the first solution mixture from which the insoluble solid fraction has been separated and water serving as a second solvent to provide a second solution mixture; and
subjecting a solid fraction insoluble in the second solution mixture to solid-liquid separation to extract the purified lignin in a liquid phase of the second solution mixture.

3. The method of producing a purified lignin according to claim 1 or 2, wherein the first organic solvent comprises at least one selected from butanol, pentanol, hexanol, ethanol and acetone.

4. A method of producing a purified lignin, comprising:
mixing a raw material lignin solution, and at least one solvent (a) selected from water and a hydrocarbon having a dipole moment of 0.25 d or less to provide a solution mixture; and
subjecting a solid fraction insoluble in the solution mixture to solid-liquid separation to extract the purified lignin in a liquid phase of the solution mixture.

5. The method of producing a purified lignin according to claim 4, wherein the raw material lignin solution comprises a lignin solution obtained by solubilizing lignin from a plant biomass in a solvent containing a first organic solvent except the hydrocarbon having a dipole moment of 0.25 d or less, or a solution obtained by dissolving solid lignin in the solvent containing the first organic solvent.

6. The method of producing a purified lignin according to claim 5, wherein the first organic solvent comprises at least one selected from an alcohol, an ether and a ketone.

7. A purified lignin, comprising the following properties:
a ratio of a phenolic hydroxyl group of a 2, 6-dimethoxyphenol moiety and a phenolic hydroxyl group of an o-methoxyphenol moiety to all phenolic hydroxyl groups is 90% or more;
a ratio of a weight-average molecular weight to a number-average molecular weight is 2.3 or less;
a ratio of a heavy component having a molecular weight of 3,000 or more in terms of polystyrene is less than 13%; and
a total remaining amount of the first organic solvent and the second organic solvent is 1 mass% or less in terms of a mass ratio.

8. A resin composition, comprising the purified lignin of claim 7.

9. A molded body, which is obtained by using the resin composition of claim 8.
